(19) Europäisches Patentamt
European Patent Office
Office européen des brevets

(11) **EP 1 541 913 A1**

## (12) DEMANDE DE BREVET EUROPEEN

(43) Date de publication:
**15.06.2005 Bulletin 2005/24**

(51) Int Cl.⁷: **F16K 31/163**, F15B 11/12

(21) Numéro de dépôt: **03447285.2**

(22) Date de dépôt: **09.12.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(71) Demandeur: **Techspace Aero S.A.**
**4041 Milmort-Herstal (BE)**

(72) Inventeur: **Badinand, Thomas**
**4000 Liège (BE)**

(74) Mandataire: **Van Malderen, Michel et al**
**Office van Malderen**
**85/043 Boulevard de la Sauvenière**
**4000 Liège (BE)**

(54) **Dispositif de contrôle de flux autorégulé**

(57) La présente invention se rapporte à une vanne commandée pour le contrôle de débit d'un fluide, présentant une pression en amont (P1) et une pression en aval (P2) de la vanne, caractérisée en ce que le dispositif de contrôle comprend des moyens de distribution de la pression du fluide de commande sur les surfaces (S1, S2) du piston (4), lesdits moyens étant aptes à modifier la surface d'action, c'est-à-dire la surface commune (S1' = S2') aux deux côtés du piston (4) mais subissant des pressions différentes des deux côtés, de sorte que la position d'équilibre prise par l'obturateur est définie uniquement par le rapport des deux pressions appliquées sur lesdites surfaces.

FIG.1

EP 1 541 913 A1

## Description

### Objet de l'invention

La présente invention se rapporte à un dispositif de contrôle de flux autorégulé tel qu'une vanne contrôlant un écoulement liquide ou gazeux. Par le terme "autorégulé", on entend que, une fois que la commande a été appliquée, l'obturateur, qui comprend par exemple une grille rotative, adopte la position demandée de manière naturellement stable.

### Etat de la technique

On connaît des dispositifs de contrôle d'une vanne où l'actionneur est un moteur externe pilotant le déplacement d'un obturateur simple, par exemple de type boisseau, papillon ou grille. Généralement, la rotation est exercée soit par des moyens pneumatiques, soit par des moyens électriques. La régulation pneumatique est le plus souvent une régulation à deux positions uniquement, ce qui limite le fonctionnement de la vanne à un fonctionnement en tout ou rien.

Le brevet américain US-A-4,010,928 décrit un exemple de vanne commandée de ce type. Il s'agit essentiellement d'une vanne à guillotine où l'obturateur se déplace perpendiculairement à l'axe de déplacement du fluide, plaçant la vanne soit en position ouverte, soit en position fermée. Chacune des extrémités de la grille est solidaire d'un piston se déplaçant dans un cylindre. Un fluide de contrôle est introduit sélectivement dans l'un ou l'autre cylindre selon la position désirée de l'obturateur.

Avantageusement, le fluide de contrôle utilisé est le fluide circulant dans la vanne, ce qui permet d'éviter l'utilisation d'une source d'énergie extérieure. De plus, il n'y a pas introduction d'un fluide étranger dans le dispositif et aucune étanchéité spécifique de l'actionneur par rapport à la vanne n'est requise.

### Buts de l'invention

La présente invention vise à s'affranchir des inconvénients de l'état de la technique, comme par exemple l'absence de régulation des moyens de contrôle de flux, le fonctionnement de la vanne uniquement en "tout ou rien", etc.

La présente invention vise donc principalement à fournir une vanne comprenant un dispositif de contrôle de flux autorégulé.

Un autre but de la présente invention est de fournir un dispositif de contrôle de vanne sans application d'aucune force mécanique externe directement sur le dispositif.

Un but complémentaire de l'invention est de permettre de s'affranchir des problèmes de fuite éventuels du fluide de commande et d'éviter la nécessité de joints internes. En particulier, on vise à ce que l'actionneur baigne complètement dans le fluide régulé.

Un but encore complémentaire de l'invention est son utilisation pour le contrôle de vannes dans le cas des fluides portés à des températures très élevées.

Un but encore complémentaire de l'invention est son utilisation pour le contrôle de vannes dans le cas des fluides portés à des températures très faibles, de préférence cryogéniques.

### Principaux éléments caractéristiques de l'invention

La présente invention concerne une vanne commandée pour le contrôle de débit d'un fluide, présentant une pression en amont et une pression en aval de la vanne, et munie :

- d'un obturateur capable d'adopter une position comprise entre une position complètement ouverte et une position complètement fermée,
- d'un dispositif de contrôle de l'obturateur comprenant un piston mobile solidaire de l'obturateur, ledit piston étant capable de coulisser dans un cylindre fixe et présentant une première surface et une deuxième surface, pouvant toutes deux être pressurisées par un fluide de commande respectivement sous une première pression et une deuxième pression,

caractérisée en ce que ledit dispositif de contrôle comprend des moyens de distribution de la pression du fluide de commande sur lesdites surfaces du piston, lesdits moyens étant aptes à modifier la surface d'action, c'est-à-dire la surface commune aux deux cotés du piston mais subissant des pressions différentes des deux côtés, de sorte que la position d'équilibre prise par l'obturateur est définie uniquement par le rapport des deux pressions appliquées sur lesdites surfaces.

Avantageusement, le fluide de commande est le fluide dont le débit est à contrôler.

De préférence, le cylindre fixe est droit ou circulaire, c'est-à-dire a la forme d'un élément de tore.

De préférence encore, le piston est un cylindre essentiellement creux de diamètre légèrement inférieur au diamètre du cylindre fixe et muni d'une surface médiane transverse partageant dynamiquement ledit cylindre fixe en une partie amont et une partie aval.

Selon des formes d'exécution préférées de l'invention, le piston est respectivement droit ou circulaire, c'est-à-dire a la forme d'un élément de tore, selon que le cylindre fixe est également respectivement droit ou circulaire. Toutefois, l'invention n'est en rien limitée par la forme du cylindre et donc du piston coulissant dans celui-ci. Ceux-ci pourraient avoir par exemple une section transverse de forme carrée ou ovale. La forme la plus avantageuse sera toutefois retenue par l'homme de métier notamment sur base de considérations relatives aux joints.

Selon l'invention, ladite première pression est la pression amont de la vanne et ladite deuxième pression est la pression aval de la vanne, de sorte que le contrôle de flux est autorégulé.

Selon une autre caractéristique de l'invention, le piston est muni, du côté amont et/ou du côté aval, d'une pluralité de cavités étanches pressurisables individuellement par le fluide de commande soit à ladite première, soit à ladite deuxième pression.

De préférence, le piston est muni, du côté amont d'une seule cavité étanche pressurisée par le fluide dont le débit est à contrôler à la pression amont et du côté aval, d'une pluralité de cavités étanches pressurisables individuellement par ledit fluide soit à sa pression aval, soit à sa pression amont.

Selon une forme d'exécution particulièrement rationnelle, toutes les cavités situées du même côté du piston, c'est-à-dire aval ou amont, ont la même taille.

Alternativement encore, la taille des cavités côté amont est différente de la taille des cavités côté aval.

La vanne faisant l'objet de l'invention est de préférence une vanne rotative à grille, à boisseau, à papillon ou encore une vanne à guillotine, mais l'invention n'est pas limitée au principe de vanne considéré.

Selon une autre modalité d'exécution, dans le cas d'une vanne rotative, le piston est droit et le couplage entre le piston et la vanne est réalisé au moyen d'une crémaillère.

Avantageusement, le dispositif de contrôle de l'obturateur est immergé dans le fluide passant dans la vanne.

De préférence, l'étanchéité externe desdites cavités est réalisée au moyen de joints dynamiques au niveau de la jonction desdites cavités avec les canalisations d'alimentation en fluide de commande.

Il sera en outre avantageux, dans le cadre de la présente invention, que la différence des pressions amont et aval du fluide passant dans la vanne soit d'au moins 10 bars ou que le diamètre du piston soit d'au moins 5 cm.

La vanne de l'invention s'applique plus particulièrement au contrôle de débit de fluides à très basses températures, de préférence cryogéniques, ou de fluides à très hautes températures.

### Brève description des figures

La figure 1 représente schématiquement une forme d'exécution préférée pour un dispositif de contrôle de flux selon la présente invention, correspondant à un obturateur rotatif à grille.

La figure 2 représente schématiquement les conditions de pression au niveau de l'interface de type piston du dispositif de la figure 1.

La figure 3 représente schématiquement une vue en coupe transversale de ladite interface côté aval, avec ses cavités.

La figure 4 représente encore schématiquement une forme d'exécution préférée de l'invention où ladite interface comprend un piston cylindrique droit creux, présentant deux cavités côté aval et coulissant dans un cylindre fixe.

La figure 5 représente schématiquement une autre forme d'exécution préférée d'un dispositif de contrôle de flux selon l'invention à piston droit, le couplage entre le piston et la grille rotative étant réalisé par une crémaillère.

### Description d'une forme d'exécution préférée de l'invention

Le dispositif proposé selon une modalité d'exécution préférée de la présente invention, dans le cas d'une vanne à obturateur rotatif, comporte un obturateur à grille composé d'une grille fixe 1 et d'une grille tournante 2, ainsi qu'un cylindre creux fixe 3 faisant office de guide pour un piston 4 coulissant dans le cylindre 3 et réalisant l'interface entre deux chambres dynamiques dudit cylindre 3. Selon l'invention, le piston 4 est solidaire de la grille tournante 2. En outre, le piston 4 a également de préférence une forme cylindrique creuse et est muni d'au moins deux cavités isolées l'une de l'autre et destinées à recevoir le fluide de commande.

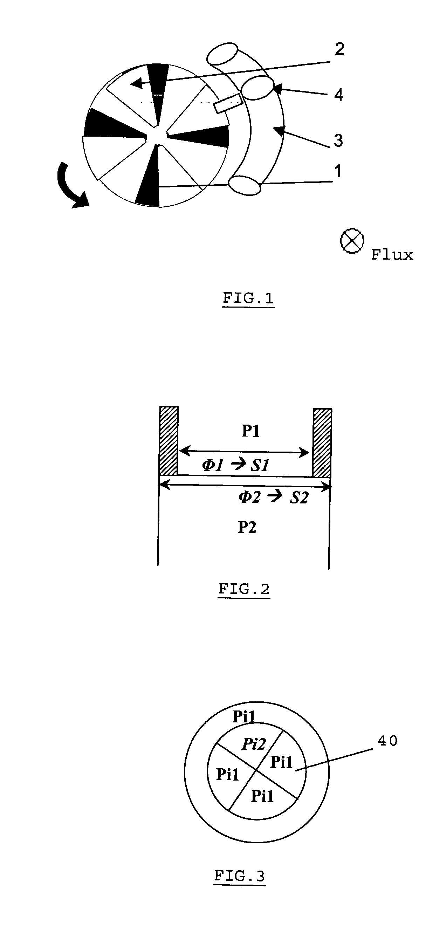

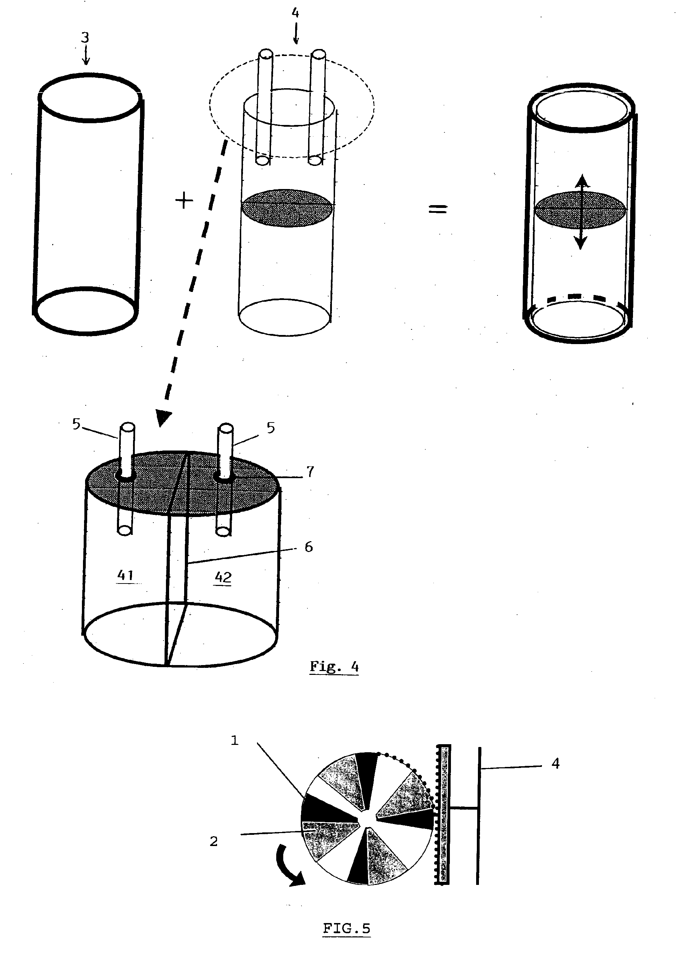

Le dispositif de l'invention comporte en outre des moyens de distribution des pressions dans les différentes cavités du piston, chaque cavité étant pressurisable par application d'une première pression, qui est la pression en amont de la vanne ou par application d'une deuxième pression, qui est la pression en aval de la vanne. Ces cavités 40, 41, 42, illustrées aux figures 3 et 4, peuvent être situées d'un seul côté ou des deux côtés du piston.

On notera que, dans le cas particulier précité, l'utilisation d'un obturateur rotatif à grille impose l'utilisation d'un cylindre fixe circulaire (forme torique). Cependant, l'invention n'est pas limitée à une forme particulière d'obturateur. Ainsi, on peut également recourir à un obturateur à fermeture par translation, tel qu'un obturateur à guillotine, ce qui impose a priori un dispositif de contrôle à cylindre droit.

### Principe de fonctionnement

Le principe de fonctionnement du dispositif de l'invention est décrit ci-après. L'innovation repose essentiellement sur la constatation surprenante que, suite à l'application de la commande par distribution de pressions, la position de l'obturateur se stabilise d'elle-même par équilibrage des pressions amont et aval au niveau du piston. De plus, différentes positions stables de l'obturateur sont obtenues pour différents rapports des pressions au niveau des deux côtés du piston-interface. Ces rapports de pressions sont eux-mêmes obtenus en faisant varier le rapport des surfaces effectives correspondantes.

Soit la pression amont P1 donnée. Une pression P2 est désirée en aval. Pour équilibrer dans une position stable, l'interface du piston avec la pression amont P1 (au-dessus) et la pression aval P2 (en dessous), il faut réaliser l'équilibre des forces appliquées, à savoir :

$$P1.S1 = P2.S2 \qquad (1),$$

S1 et S2 étant les surfaces du piston respectivement du côté amont et du côté aval (figure 2).

Ainsi, la pression P1 étant donnée, si les surfaces S1 et S2 sont également données, l'interface se stabilisera pour une pression P2 telle que :

$$P2 = P1.S1/S2 \qquad (2).$$

La seule variable du système est la pression aval P2. L'interface étant liée à la grille mobile (voir figure 1, la partie grisée représentant les lumières de la grille mobile tandis que les lumières de la grille fixe sont représentées en noir), les cas suivants peuvent se présenter :

- la pression P2 est trop faible. Dans ce cas, une force vers le bas apparaît sur la surface, crée par la pression amont, ce qui ouvre la vanne et donc augmente la pression P2 jusqu'à ce que P2 atteigne la bonne valeur, donnée par l'équation (2) ;
- la pression P2 est trop forte. Dans ce cas, une force vers le haut apparaît sur la surface, ce qui ferme la vanne et donc baisse la pression P2 jusqu'à ce que la bonne valeur donnée par l'équation (2) soit atteinte.

Ce dispositif a l'avantage d'être naturellement stable étant donné une surface S1 et une surface S2. La différence de pression générée est uniquement contrôlée par la surface d'action. Par "surface d'action", on entend la surface commune aux deux cotés du piston mais subissant des pressions différentes des 2 cotés, ce qui génère une force nette appliquée au piston. Ci-dessus, la surface d'action est équivalente à S1 car S1 < S2.

Principe de réglage de la différence de pression

A présent, pour pouvoir régler sur une autre valeur de pression aval, il faut changer la surface d'action entre la région amont et la région aval. Ceci est réalisé en cloisonnant par exemple la partie aval du cylindre en différents éléments de surface correspondant aux différentes cavités 40, comme indiqué sur la figure 3. Dans chacune des cavités 40 est imposée soit la pression amont, soit la pression aval.

Lorsque la pression aval (P2) est imposée dans toutes les cavités 40, le cas simple décrit sur la figure 2 est rencontré. La surface d'action est maximale et donc la pression aval est minimale.

En remplissant certaines cavités, dont la surface totale par cavité est par exemple s = 0,1 x S2, avec la valeur de pression amont (P1) , la surface d'action de la force nette est réduite et donc la pression aval a besoin d'être plus forte. On a :

$$P1(S1-s) = P2'(S2-s) \qquad (3),$$

d'où

$$P2' = P1(S1-0,1 \times S2)/(S2-0,1 \times S2)$$

$$= P1 \times S1/S2 \times (1-0,1 \times S2/S1)/0.9 \qquad (4)$$

Or, à l'équilibre, S2/S1 > 1, la pression amont P1 étant supérieure à la pression aval P2, donc :

$$(1-0,1 \times S2/S1)/0.9 < 1 \qquad (5),$$

d'où il s'ensuit, dans le nouvel état d'équilibre :

$$P2' < P2 \qquad (6).$$

En conclusion, de par le remplissage des différentes cavités de la partie aval du cylindre avec soit la pression amont, soit la pression aval, on peut obtenir toute une série de différences de pression. Ainsi, par une bonne répartition des tailles des cavités, on peut obtenir un nombre important de rapports de pression.

Pour pouvoir assurer la commande, le dispositif de contrôle à piston est avantageusement réalisé d'une pièce, ou monté pour ne faire qu'une pièce, comprenant la partie "haute" et la partie "basse".

Sur la figure 4, on a encore représenté une variante du dispositif de l'invention à cylindre droit. Le cylindre fixe 3 est un cylindre creux. Le piston 4 se compose d'un cylindre également creux apte à coulisser à l'intérieur du cylindre fixe 3 et présentant deux cavités étanches 41, 42 délimitées par la surface externe du piston et séparées par une cloison interne 6.

Avantageusement, le fluide de commande est le même que le fluide régulé. En conséquence, aucune étanchéité interne n'est requise absolument. Uniquement l'étanchéité vis-à-vis de l'extérieur doit être assurée. Les seuls joints nécessaires sont les joints dynamiques 7 qui se placent autour du tube 5 assurant la mise sous pression de chaque chambre 41, 42.

Comme variante de la forme d'exécution exemplative décrite ci-dessus, le couplage entre le piston et la grille peut aussi être effectué par une crémaillère permettant d'avoir un piston droit.

De manière générale, le dispositif à piston peut être couplé avec d'autres types de vannes que les vannes à grille rotative, comme par exemple les vannes à guillotine, les vannes à boisseau, etc., sans que ce soit limitatif pour la mise en oeuvre de la présente invention.

Le dispositif selon la présente invention présente une série d'avantages.

Pour des applications à haute pression, soit une différence de pression minimum de 10 bars et un diamètre de piston de 5 cm, la force d'action est de l'ordre de 2000 N, ce qui est largement suffisant pour actionner la grille et vaincre la résistance d'éventuels joints dynamiques.

Aucune force mécanique externe n'est à appliquer au système selon l'invention mais uniquement une commande électrique ou autre sélectionnant les cavités à remplir avec soit la pression amont, soit la pression aval.

L'utilisation du fluide régulé pour la commande permet d'éviter toute intrusion de fluides étrangers et à l'actionneur de baigner dans les fluides.

Le fait que l'action ne soit pas électrique mais hydraulique ou pneumatique permet d'utiliser le dispositif de contrôle de la présente invention pour des vannes travaillant à de très faibles températures (températures cryogéniques) aussi bien que pour des vannes à gaz chauds avec des températures allant jusqu'à 400 K.

Enfin, la précision de la régulation, c'est-à-dire du rapport des pressions appliquées, dépend uniquement de la précision d'usinage du piston.

## Revendications

1. Vanne commandée pour le contrôle de débit d'un fluide, présentant une pression en amont (P1) et une pression en aval (P2) de la vanne, et munie :

   - d'un obturateur (2) capable d'adopter une position comprise entre une position complètement ouverte et une position complètement fermée,
   - d'un dispositif de contrôle de l'obturateur (2) comprenant un piston mobile (4) solidaire de l'obturateur (2), ledit piston (4) étant capable de coulisser dans un cylindre fixe (3) et présentant une première surface (S1) et une deuxième surface (S2), pouvant toutes deux être pressurisées par un fluide de commande respectivement sous une première pression (P1') et une deuxième pression (P2'),

   **caractérisée en ce que** ledit dispositif de contrôle comprend des moyens de distribution de la pression du fluide de commande sur lesdites surfaces (S1, S2) du piston (4), lesdits moyens étant aptes à modifier la surface d'action, c'est-à-dire la surface commune (S1' = S2') aux deux cotés du piston (4) mais subissant des pressions différentes des deux côtés, de sorte que la position d'équilibre prise par l'obturateur est définie uniquement par le rapport des deux pressions appliquées sur lesdites surfaces.

2. Vanne selon la revendication 1, **caractérisée en ce que** le fluide de commande est le fluide dont le débit est à contrôler.

3. Vanne selon la revendication 1 ou 2, **caractérisé en ce que** le cylindre fixe (3) est droit ou circulaire, c'est-à-dire a la forme d'un élément de tore.

4. Vanne selon la revendication 1, 2 ou 3, **caractérisée en ce que** le piston (4) est un cylindre essentiellement creux de diamètre légèrement inférieur au diamètre du cylindre fixe (3) et muni d'une surface médiane transverse partageant dynamiquement ledit cylindre fixe en une partie amont et une partie aval.

5. Vanne selon la revendication 4, **caractérisée en ce que** le piston (4) est respectivement droit ou circulaire, c'est-à-dire a la forme d'un élément de tore, selon que le cylindre fixe (3) est également respectivement droit ou circulaire.

6. Vanne selon l'une quelconque des revendications 1 à 5, **caractérisée en ce que** ladite première pression (P1') est la pression amont (P1) de la vanne et ladite deuxième pression (P2') est la pression aval (P2) de la vanne, de sorte que le contrôle de flux est autorégulé.

7. Vanne selon l'une quelconque des revendications 1 à 6, **caractérisée en ce que** le piston (4) est muni, du côté amont et/ou du côté aval, d'une pluralité de cavités étanches pressurisables individuellement par le fluide de commande soit à ladite première (P1'), soit à ladite deuxième (P2') pression.

8. Vanne selon la revendication 7, **caractérisée en ce que** le piston (4) est muni, du côté amont d'une seule cavité étanche pressurisée par le fluide dont le débit est à contrôler à la pression amont (P1) et du côté aval, d'une pluralité de cavités étanches pressurisables individuellement par ledit fluide soit à sa pression aval (P2), soit à sa pression amont (P1).

9. Vanne selon la revendication 7 ou 8, **caractérisée en ce que** toutes les cavités situées du même côté du piston, c'est-à-dire aval ou amont, ont la même taille.

10. Vanne selon la revendication 9, **caractérisé en ce que** la taille des cavités côté amont est différente de la taille des cavités côté aval.

**11.** Vanne selon l'une quelconque des revendications précédentes, **caractérisée en ce que** la vanne est une vanne rotative à grille, à boisseau, à papillon ou encore une vanne à guillotine.

**12.** Vanne selon la revendication 11, **caractérisée en ce que**, dans le cas d'une vanne rotative, le piston est droit et le couplage entre le piston et la vanne est réalisé au moyen d'une crémaillère.

**13.** Vanne selon l'une quelconque des revendications précédentes, **caractérisée en ce que** le dispositif de contrôle de l'obturateur est immergé dans le fluide passant dans la vanne.

**14.** Vanne selon la revendication 13, **caractérisée en ce que** l'étanchéité externe desdites cavités est réalisée au moyen de joints dynamiques au niveau de la jonction desdites cavités avec les canalisations d'alimentation en fluide de commande.

**15.** Vanne selon l'une des revendications précédentes, **caractérisée en ce que** la différence des pressions amont et aval du fluide passant dans la vanne est d'au moins 10 bars.

**16.** Vanne selon l'une quelconque des revendications précédentes, **caractérisée en ce que** le diamètre du piston (4) est d'au moins 5 cm.

**17.** Utilisation d'une vanne selon l'une quelconque des revendications précédentes pour le contrôle de débit de fluides à très basses températures, de préférence cryogéniques.

**18.** Utilisation d'une vanne selon l'une quelconque des revendications précédentes pour le contrôle de débit de fluides à très hautes températures.

FIG.1

FIG.2

FIG.3

Fig. 4

FIG.5

**Office européen des brevets**

# RAPPORT DE RECHERCHE EUROPEENNE

Numéro de la demande

EP 03 44 7285

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | US 4 010 928 A (SMITH RUSSELL G) 8 mars 1977 (1977-03-08) * colonne 3, ligne 20 - colonne 5, ligne 2; figures 1,2 * --- | 1-3 | F16K31/163 F15B11/12 |
| A | US 3 218 024 A (WERNER KROEKEL ROLF HEINZ) 16 novembre 1965 (1965-11-16) * colonne 3, ligne 5 - colonne 4, ligne 15; figure 3 * --- | 1,17,18 | |
| A | EP 0 031 249 A (FUJI METAL MFG) 1 juillet 1981 (1981-07-01) * page 3, ligne 11 - page 5, ligne 13; figure * ----- | 1 | |

DOMAINES TECHNIQUES RECHERCHES (Int.Cl.7)

F16K
F15B

Le présent rapport a été établi pour toutes les revendications

| Lieu de la recherche | Date d'achèvement de la recherche | Examinateur |
|---|---|---|
| LA HAYE | 6 mai 2004 | Lanel, F-B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................................................

& : membre de la même famille, document correspondant

EPO FORM 1503 03.82 (P04C02)

**EP 1 541 913 A1**

**ANNEXE AU RAPPORT DE RECHERCHE EUROPEENNE
RELATIF A LA DEMANDE DE BREVET EUROPEEN NO.**

EP 03 44 7285

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-05-2004

| Document brevet cité au rapport de recherche | | Date de publication | Membre(s) de la famille de brevet(s) | | Date de publication |
|---|---|---|---|---|---|
| US 4010928 | A | 08-03-1977 | CA | 1007630 A1 | 29-03-1977 |
| US 3218024 | A | 16-11-1965 | AUCUN | | |
| EP 0031249 | A | 01-07-1981 | JP | 56093578 U | 25-07-1981 |
| | | | EP | 0031249 A1 | 01-07-1981 |

Pour tout renseignement concernant cette annexe : voir Journal Officiel de l'Office européen des brevets, No.12/82

EPO FORM P0460